# EUROPÄISCHE PATENTSCHRIFT

(11) **EP 2 850 341 B1**
(45) Veröffentlichungstag und Bekanntmachung des Hinweises auf die Patenterteilung: **13.06.2018**
(21) Anmeldenummer: 13737805.5
(22) Anmeldetag: 08.05.2013
(51) Int. Cl.: F16H 37/04, F16H 63/30, F16D 11/14, F16D 11/00

(54) **GETRIEBEANORDNUNG**
GEARING ASSEMBLY
ENSEMBLE DE TRANSMISSION

(30) Priorität: 15.05.2012 DE 102012208126
(43) Veröffentlichungstag der Anmeldung: 25.03.2015
(73) Patentinhaber: Deere & Company, Moline, IL 61265 (US)
(72) Erfinder: OTTEN, Ulrich, 67396 Speyer (DE)
(74) Vertreter: John Deere GmbH & Co. KG
(86) Internationale Anmeldenummer: PCT/EP2013/059593
(87) Internationale Veröffentlichungsnummer: WO 2013/171112

(56) Entgegenhaltungen:
- EP-A1- 0 365 935
- EP-A1- 1 980 439
- EP-A2- 1 295 750
- DE-A1- 10 121 634

## Beschreibung

Die Erfindung betrifft eine Getriebeanordnung, umfassend eine Untersetzungsstufe mit einem Antriebselement zum Antrieb der Getriebeanordnung um eine Drehachse D, eine Abtriebswelle, auf der ein Zahnrad drehbar angeordnet ist, eine Schaltvorrichtung, die ein Schaltelement zur Einnahme mehrerer Schaltstellungen aufweist, wobei in einer ersten Schaltstellung das Schaltelement die Abtriebswelle unter Zwischenschaltung der Untersetzungsstufe mit dem Antriebselement antriebsmäßig verbindet.

Im Stand der Technik sind Getriebeanordnungen für landwirtschaftliche Arbeitsfahrzeuge bekannt, beispielsweise für Traktoren oder Erntemaschinen, die mehrere hintereinander angeordnete Getriebeeinheiten aufweisen. Derartige Getriebeanordnungen dienen dazu, den hohen Anforderungen in Bezug auf eine möglichst feinstufige Abstufung aber auch weite Spreizung der Getriebeübersetzungen gerecht zu werden.

Die DE 10 2010 029 597 A1 beschreibt eine modular aufgebaute Getriebeanordnung für ein landwirtschaftliches Fahrzeug, bei der eine Variante eine Zwischengetriebeeinheit in Form einer Untersetzungsstufe aufweist, die im Kraftfluss zwischen einem Doppelkupplungsgetriebe und einem Gruppenschaltgetriebe angeordnet ist. Die DE 101 21 634 A1 offenbart eine Getriebeanordnung mit den Merkmalen des Oberbegriffs von Anspruch 1.

Untersetzungsstufen, in Anwendungen in landwirtschaftlichen Fahrzeugen auch Kriechganggetriebe genannt, nach dem Stand der Technik weisen Schaltvorrichtung auf, über die die Übersetzungsstufe in den Kraftfluss hinzugeschaltet werden kann beziehungsweise über die der Kraftfluss an der Übersetzungsstufe vorbeigeschaltet werden kann. Die axiale Länge derartiger Untersetzungsstufen wird im Allgemeinen bestimmt durch die kumulierte Breite von zwei Zahnräder, zwei Lagerstellen und einer Schaltvorrichtung, wobei die Breite der Schaltvorrichtung etwa ein Drittel der gesamten axialen Länge der Untersetzungsstufe ausmacht. Das im Kraftfluss nachfolgende Gruppenschaltgetriebe weist in der Regel mehrere Schaltvorrichtungen auf. Insbesondere in Kombination mit einem Doppelkupplungsgetriebe ergibt sich insgesamt eine axiale Baulänge der modularen Getriebeanordnung, bestehend aus Doppelkupplungsgetriebe, Untersetzungsstufe und Gruppenschaltgetriebe, deren Einbau in den Rahmen eines landwirtschaftlichen Fahrzeugs nur erschwert möglich ist.

Die Aufgabe der vorliegenden Erfindung besteht somit darin, eine axial verkürzte Getriebeanordnung für den beschriebenen Zweck bereitzustellen.

Die Aufgabe wird gelöst durch eine Getriebeanordnung mit den Merkmalen des Anspruchs 1, umfassend eine Untersetzungsstufe mit einem Antriebselement zum Antrieb der Getriebeanordnung um eine Drehachse D, eine Abtriebswelle, auf der ein Zahnrad drehbar angeordnet ist, eine Schaltvorrichtung, die ein Schaltelement zur Einnahme mehrerer Schaltstellungen auf-weist, wobei in einer ersten Schaltstellung das Schaltelement die Abtriebswelle unter Zwischenschaltung der Untersetzungsstufe mit dem Antriebselement antriebsmäßig verbindet, in einer zweiten Schaltstellung das Schaltelement das Zahnrad mit dem Antriebselement antriebsmäßig verbindet.

Dies bedeutet, dass in der ersten Schaltstellung ein Kraftfluss von dem Antriebselement über die Untersetzungsstufe auf die Abtriebswelle möglich ist, während in der zweiten Schaltstellung ein Kraftfluss von dem Antriebselement auf das Zahnrad unter Umgehung der Untersetzungsstufe möglich ist. In diesem Fall ist die Drehzahl des Antriebselements gleich der Drehzahl der Abtriebswelle.

Der Vorteil dieser erfindungsgemäßen Getriebeanordnung besteht in der zumindest teilweisen Integration der Untersetzungsstufe mit dem im Kraftfluss nachfolgenden Gruppenschaltgetriebe. Diese zumindest teilweise Integration erfolgt insofern, als dass sich die Untersetzungsstufe mit dem Gruppenschaltgetriebe eine Schaltvorrichtung funktionsmäßig teilt. Strukturell betrachtet kann auf eine eigene, separate Schaltvorrichtung für die Untersetzungsstufe verzichtet werden, da die in Kraftflussrichtung betrachtet erste Schaltvorrichtung des Gruppenschaltgetriebes erfindungsgemäß modifiziert wird und das Schalten der Untersetzungsstufe mit übernimmt. Bei der Abtriebswelle der erfindungsgemäßen Getriebeanordnung handelt es sich somit um die Antriebswelle des Gruppenschaltgetriebes und bei dem Zahnrad der erfindungsgemäßen Getriebeanordnung handelt es sich um das Antriebszahnrad mit dem, nachdem es mit der Schaltvorrichtung drehfest mit der Antriebswelle verbunden wurde, die Zahnradgruppe C auf der Gegenwelle des Gruppenschaltgetriebes angetrieben wird. Trotz der zumindest teilweisen Integration der erfindungsgemäßen Getriebeanordnung mit dem Gruppenschaltgetriebe bleibt die Modularität der gesamten Anordnung bestehend beispielsweise aus dem Doppelkupplungsgetriebe, wahlweise dem Kriechganggetriebe und dem Gruppenschaltgetriebe erhalten. In einfacher Weise kann nämlich eine Anordnung die beispielsweise aus einem Doppelkupplungsgetriebe und einem Gruppenschaltgetriebe besteht um eine erfindungsgemäße Getriebeanordnung erweitert beziehungsweise ergänzt werden, in dem lediglich das bestehende Schaltelement der ersten Schaltvorrichtung des Gruppenschaltgetriebes gegen ein erfindungsgemäßes Schaltelement ausgetauscht wird. Die erfindungsgemäße Getriebeanordnung kann somit sowohl als Erstausrüstung als auch als Nachrüstsatz eingesetzt werden. Bei dem Antriebselement handelt es sich bevorzugt um eine Hohlwelle, die auf ihrer Antriebsseite durch geeignete Formschlussmittel, beispielsweise eine Längsverzahnung auf dem Außenumfang, mit der Abtriebswelle eines Doppelkupplungsgetriebe verbunden werden kann.

In der erfindungsgemäßen Getriebeanordnung ist das Schaltelement ausgehend von der ersten Schaltstellung in eine Freilaufstellung verschiebbar, in der das Antriebselement und die Abtriebswelle gegeneinander drehbar sind. Hierdurch wird gewährleistet, dass beim Verschieben des Schaltelements von der ersten Schaltstellung in Richtung der zweiten Schaltstellung ein Einspuren einer Verzahnung des Schaltelements in eine Verzahnung des Antriebselements möglich ist.

Weiterhin ist das Schaltelement erfindungsgemäß ausgehend von der zweiten Schaltstellung in eine Zwischenschaltstellung verschiebbar, in der das Zahnrad gegenüber der Schaltvorrichtung drehbar ist und das Schaltelement die Abtriebswelle mit dem Antriebselement antriebsmäßig verbindet. Hierdurch können unter Umgehung der Untersetzungsstufe die nicht durch das Zahnrad angetriebenen Gruppen des Gruppenschaltgetriebes angetrieben werden. Erfindungsgemäß ist das Schaltelement sequentiell zwischen der ersten Schaltstellung, der Freilaufstellung, der Zwischenschaltstellung und der zweiten Schaltstellung axial verschiebbar. Hierdurch ergibt sich eine einfache Kinematik des Schaltelements, welche ferner in bevorzugter Form als Hülse, die konzentrisch zu dem Antriebselement und der Abtriebswelle angeordnet ist, gestaltet sein kann.

Bevorzugt ist die Schaltvorrichtung drehfest auf der Abtriebswelle angeordnet. Hierdurch ist mittels des verschiebbaren Schaltelements gewährleistet, dass der Kraftfluss über die Schaltvorrichtung auf die Abtriebswelle geleitet werden kann.

In weiterhin konkreter Ausgestaltung umfasst die Untersetzungsstufe eine Gegenwelle, einen ersten Zahnradsatz mit einem zweiten und dritten Zahnrad, die drehfest jeweils auf dem Antriebselement und der Gegenwelle angeordnet sind, und einen zweiten Zahnradsatz mit einem vierten und fünften Zahnrad, wobei das vierte Zahnrad drehbar auf dem Antriebselement und das fünfte Zahnrad drehfest auf der Gegenwelle angeordnet sind.

Bevorzugt weist das vierte Zahnrad in seiner der Schaltvorrichtung zugewandten Stirnseite eine konzentrische Ausnehmung auf, in die das Schaltelement zumindest in der ersten Schaltstellung teilweise eingerückt ist. Bevorzugt ist in der Ausnehmung eine umlaufende Verzahnung angeordnet, zum formschlüssigen Eingriff des Schaltelements in der ersten Schaltstellung. Hierdurch wird die axiale Baulänge der Getriebeanordnung verkürzt.

Bevorzugt ist die Abtriebswelle in dem Antriebselement drehbar gelagert ist. Hierdurch ist gewährleistet, dass sich ein Drehzahlunterschied zwischen dem Antriebselement und der Abtriebswelle in der ersten Schaltstellung des Schaltelements einstellen kann.

Bevorzugt weist das Antriebselement an seinem der Schaltvorrichtung zugewandten axialen Ende umfangsverteilt eine Verzahnung auf, zum formschlüssigen Eingriff des Schaltelements in zumindest einer der Schaltstellungen. Durch die Verzahnung an dem axialen Ende, das der Schaltvorrichtung zugewandt ist, werden kurze Schaltwege für das Schaltelement gewährleistet.

Bevorzugt bildet das axiale Ende des Antriebselements einen radial auskragenden Bund aus, der umfangsverteilt die Verzahnung aufweist. Durch den radial auskragenden Bund wird zur einen axialen Seite in vorteilhafterweise eine Anlauffläche für die Untersetzungsstufe, insbesondere für eins der Zahnräder der Untersetzungsstufe, bereitgestellt. Zur anderen axialen Seite wird eine Anlauffläche für die Schaltvorrichtung bereitgestellt.

Bevorzugt ist das Schaltelement mehrteilig zusammengesetzt. Dies ist fertigungstechnisch günstig, da durch Laserschweißen herstellbar und da das Schaltelement der ersten Schaltvorrichtung des Gruppenschaltgetriebes lediglich um ein weiteres Teil ergänzt beziehungsweise modifiziert werden muss.

Bevorzugt umfasst das Schaltelement zwei Schaltringe, wobei die Schaltringe an jeweiligen Stirnflächen zu dem Schaltelement zusammengesetzt sind. Ferner ist bevorzugt, dass jeder der zwei Schaltringe jeweils zwei umfänglich verlaufende Verzahnungen aufweist. Alternativ kann das Schaltelement einteilig ausgeführt sein, wobei es zwei Ringabschnitte aufweist und jeder Ringabschnitt zwei umfänglich verlaufende Verzahnungen aufweist.

In konkreter Ausgestaltung bildet der der Untersetzungsstufe zugewandte erste Schaltring, alternativ der der Untersetzungsstufe zugewandte Ringabschnitt, die erste Verzahnung auf einem Innenumfang und die zweite Verzahnung auf einem Außenumfang aus.

Bevorzugt erstrecken sich die erste Verzahnung und die zweite Verzahnung des ersten Schaltrings ausgehend von einer Querschnittsebene des Schaltrings zu entgegengesetzten axialen Seiten. Insbesondere ist hierbei vorgesehen, dass sich die auf dem Außenumfang angeordnete zweite Verzahnung in axialer Richtung betrachtet innerhalb der auf dem Innenumfang angeordneten ersten Verzahnung befindet. Hierdurch werden in vorteilhafterweise geringe Schaltwege zwischen der ersten Schaltstellung, der Freilaufstellung und der Zwischenschaltstellung gewährleistet.

Ein bevorzugtes Ausführungsbeispiel der erfindungsgemäßen Getriebeanordnung wird anhand der nachfolgenden Figuren beschrieben. Hierin zeigen
- Figur 1: ein Getriebeschema mehrerer hintereinander gereihter Getriebeeinheiten mit einer erfindungsgemäßen Getriebeanordnung und
- Figur 2: einen Längsschnitt durch eine erfindungsgemäße Getriebeanordnung.

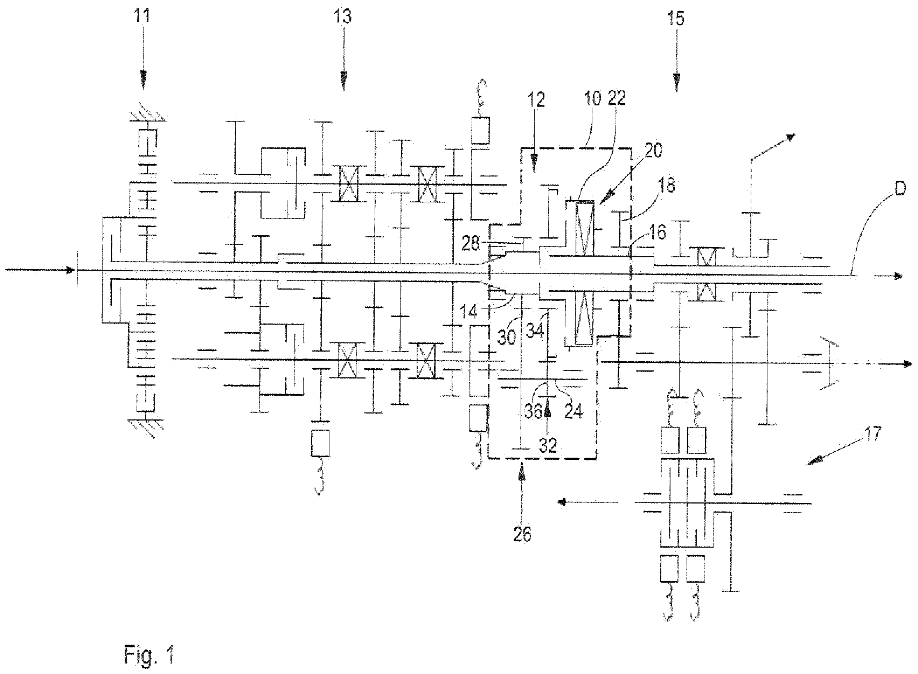

Die Figur 1 zeigt ein Getriebeschema mit mehreren hintereinander gereihten Getriebeeinheiten 11, 12, 13, 15, 17 und die erfindungsgemäße Getriebeanordnung 10, die um die Drehachse D antreibbar sind. Sämtliche auf eine radiale oder axiale Richtung bezogen Angaben sind an der Drehachse D orientiert.

Die erste Getriebeeinheit 11 ist ein reversierbares Doppelplanetengetriebe, die zweite Getriebeanordnung 13 ist ein Doppelkupplungsgetriebe, die dritte Getriebeeinheit 12 ist eine Untersetzungsstufe, die vierte Getriebeeinheit 15 ist ein Gruppenschaltgetriebe mit drei Schaltgruppen A, B und C, die fünfte Getriebeeinheit 17 ist ein Stirnradgetriebe zum bedarfsweisen Antrieb einer Vorderachse.

Zu erkennen ist, dass die erfindungsgemäße Getriebeanordnung 10 die Untersetzungsstufe 12, das Zahnrad 18, die Schaltvorrichtung 20 und die Abtriebswelle 16 umfasst, wobei das Zahnrad 18, die Schaltvorrichtung 20 und die Abtriebswelle 16 bereits innerhalb eines nicht dargestellten Gehäuses der vierten Getriebeeinheit 15 angeordnet sind. Ferner gilt es zu bemerken, das die Abtriebswelle 16 aus Sicht der vierten Getriebeeinheit 15 eine Antriebswelle darstellt. Das Zahnrad 18 ist in geeigneter Weise drehbar auf der Abtriebswelle 18 angeordnet.

Die Untersetzungsstufe 12 umfasst einen ersten Zahnradrsatz 26 und einen zweiten Zahnradsatz 32. Der erste Zahnradsatz 26 umfasst ein zweites Zahnrad 28 und ein drittes Zahnrad 30. Der zweite Zahnradsatz 32 umfasst ein viertes Zahnrad 34 und ein fünftes Zahnrad 36. Das zweite Zahnrad 28 ist auf dem Antriebselement 14 und das dritte und fünfte Zahnrad 30, 36 sind auf einer Gegenwelle 24 der Untersetzungsstufe 12 drehfest angeordnet. Das vierte Zahnrad 34 ist in geeigneter Weise drehbar auf dem Antriebselement 14 angeordnet.

Die Abtriebswelle 16 ist in geeigneter Weise drehbar innerhalb eines nicht dargestellten Gehäuses der vierten Getriebeeinheit 15 gehalten und drehbar innerhalb des Antriebselements 14 gelagert. Die Schaltvorrichtung 20 ist konzentrisch zu der Abtriebswelle 16 beziehungsweise der Drehachse D und drehfest auf der Abtriebswelle 16 gehalten. Hierzu weist die Schaltvorrichtung 20 eine Nabe 60 auf, die über eine Längsverzahnung 61 auf der Abtriebswelle 16 drehfest gehalten ist. Ferner weist die Schaltvorrichtung 20 ein Schaltelement 22 auf, das ringförmig ist und das auf der Nabe 60 axial verschiebbar und drehfest gehalten ist und somit ebenfalls konzentrisch zur Drehachse D angeordnet ist. Das Schaltelement 22 kann verschiedene Schaltstellungen einnehmen, indem es durch nicht näher dargestellte Betätigungsmittel axial gegenüber der Nabe 60 und damit auch gegenüber der Abtriebswelle 16 verschoben wird.

Bei dem vorliegend beschriebenen Ausführungsbeispiel der erfindungsgemäßen Getriebeanordnung 10 kann das Schaltelement 22 sequentiell die vier Schaltstellungen erste Schaltstellung, Freilaufstellung, Zwischenschaltstellung und zweite Schaltstellung einnehmen. In der ersten Schaltstellung ist das Schaltelement 22 vollständig gegenüber der Nabe 60 in Richtung des vierten Zahnrads 34 der Untersetzungsstufe 12 verschoben. In dieser ersten Schaltstellung greift das Schaltelement 22 in später noch beschriebener Weise formschlüssig in das vierte Zahnrad 34 ein, so dass das vierte Zahnrad 34 antriebsmäßig mit der Abtriebswelle 16 verbunden ist. In der ersten Schaltstellung kann somit ein Kraftfluss von der Antriebselement 14, welches in geeigneter Weise von der zweiten Getriebeeinheit 13 eingetrieben werden kann, über die Untersetzungsstufe 12 auf die Abtriebswelle 16, die aus Sicht der vierten Getriebeeinheit 15 deren Antriebswelle ist, übertragen werden, wobei die Abtriebswelle 16 mit dem Untersetzungsverhältnis der Untersetzungsstufe 12 von dem Antriebselement 14 angetrieben wird.

In der zweiten Schaltstellung ist das Schaltelement 22 vollständig gegenüber der Nabe 60 in Richtung des Zahnrads 18, welches innerhalb der Getriebeanordnung 10 auch als erstes Zahnrad 18 bezeichnet werden kann, verschoben. In dieser zweiten Schaltstellung greift das Schaltelement 22 gleichzeitig formschlüssig in das Antriebselement 14 und mittelbar über einen Kupplungskörper 62 der Schaltvorrichtung 20 formschlüssig in das Zahnrad 18 ein, so dass das Antriebselement 14 antriebsmäßig mit dem Zahnrad 18 verbunden ist und zwar ohne Zwischenschaltung der Untersetzungsstufe 12. Somit dreht sich das Zahnrad 18 mit der Drehzahl des Antriebselements 14.

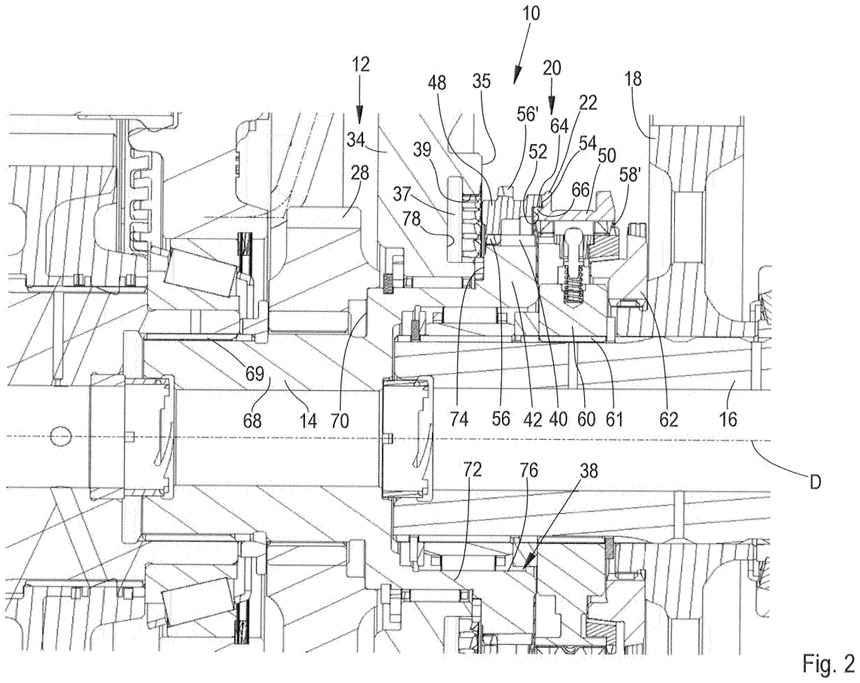

In der Zwischenschaltstellung, die in der Figur 2 zu erkennen ist, ist das Schaltelement 22 ausgehend von der zweiten Schaltstellung in Richtung des vierten Zahnrads 34 der Untersetzungsstufe 12 verschoben. In dieser Zwischenschaltstellung greift das Schaltelement 22 gleichzeitig formschlüssig in das Antriebselement 14 und in die Nabe 60 der Schaltvorrichtung 20 ein, so dass das Antriebselement 14 antriebsmäßig mit der Abtriebswelle 16 und zwar ohne Zwischenschaltung der Untersetzungsstufe 12 verbunden ist. Somit dreht sich die Abtriebswelle 16 mit der Drehzahl des Antriebselements 14.

Die Freilaufposition des Schaltelements 22 liegt zwischen der ersten Schaltstellung und der Zwischenschaltstellung. In dieser Freilaufstellung ist das Schaltelement 22 lediglich gegenüber der Nabe 60 der Schaltvorrichtung 20 drehfest gehalten und steht in keinem Eingriff mit dem vierten Zahnrad 34, dem Antriebselement 14 oder dem Zahnrad 18.

Anhand der Figur 2 werden Details der erfindungsgemäßen Getriebeanordnung 10 beschrieben. Die Figur 2 zeigt die Zwischenschaltstellung des Schaltelements 22 mit einem Kraftfluss wie zuvor beschrieben. Zu erkennen ist, dass das Schaltelement 22 aus zwei Schaltringen 48, 50 zusammengesetzt ist. Die zwei Schaltringe 48, 50 sind in geeigneter Weise zu dem Schaltelement 22 miteinander verbunden. Hierzu weisen die Schaltringe 48, 50 jeweils einander zugewandte Stirnflächen 52, 54 auf, wobei jede der Stirnflächen 52, 54 zu der jeweils anderen Stirnfläche 54, 52 eine gegenläufige Schulter 64, 66 ausbildet, die zur Zentrierung der Schaltringe 48, 50 zueinander dienen.

Die zwei Schaltringe 48, 50 weisen jeweils zwei umfänglich verlaufende Verzahnungen 56, 56', 58, 58' auf. Hierbei verlaufen die Verzahnungen 58, 58' des zweiten Schaltrings 50 über einen Innenumfang des zweiten Schaltrings 50. Der zweite Schaltring 50 ist der dem Zahnrad 18 zugewandte Schaltring. Bei dem der Untersetzungsstufe 12 zugewandten erste Schaltring 48 verlaufen die erste Verzahnung 56 auf einem Innenumfang und die zweite Verzahnung 56' auf einem Außenumfang des ersten Schaltrings 48, wobei sich die auf dem Außenumfang angeordnete zweite Verzahnung 56' in axialer Richtung betrachtet innerhalb der auf dem Innenumfang angeordneten ersten Verzahnung 56 befindet.

Zu erkennen ist ferner, dass das Antriebselement 14 mehrere Abschnitte verschiedener Durchmesser ausbildet. Zu unterscheiden ist ein Nabenabschnitt 68, der über einen ersten Axialbereich umfänglich eine Längsverzahnung 69 ausbildet, zur antriebsmäßigen Verbindung mit der zweiten Getriebeeinheit 13, und in einem zweiten Axialbereich das zweite Zahnrad 28 des ersten Zahnradsatzes 26 in geeigneter Weise drehfest hält. Der Nabenbereich 68 geht über eine Schulter 70 über in einen Lagerabschnitt 72, der seinerseits an einem axialen Ende 38 einen radial auskragenden Bund 42 ausbildet, wobei der Übergang von dem Lagerabschnitt 72 zu dem Bund 42 von einer weiteren Schulter 74 gebildet wird.

Auf dem Lagerabschnitt 72 ist das vierte Zahnrad 34 des zweiten Zahnradsatzes 32 drehbar gelagert und der Bund 42 bildet umfangsverteilt eine Verzahnung 40 aus, die in der Zwischenschaltstellung und in der zweiten Schaltstellung in einem Verzahnungseingriff mit der Verzahnung 56 auf dem Innenumfang des Schaltrings 48 steht. Insgesamt bilden der Lagerabschnitt 72 und der Bund 42 eine topfförmige Öffnung 76, in der über geeignete Lagermittel die Abtriebswelle 16 drehbar gelagert ist. Das vierte Zahnrad 34, der Bund 42 und die Nabe 60 der Schaltvorrichtung 20 sind in axialer Richtung betrachtet weitestgehend unmittelbar benachbart angeordnet.

Ferner ist zu erkennen, dass das vierte Zahnrad 34 in seiner der Schaltvorrichtung 20 zugewandten Stirnseite 35 eine konzentrische beziehungsweise nutförmige Ausnehmung 37 aufweist. In der Ausnehmung 37 verläuft auf dem radial äußeren Innendurchmesser eine Verzahnung 39, die zumindest ihrer Breite entsprechend einen Abstand in axialer Richtung zu einer Grundfläche 78 der Ausnehmung 37 aufweist.

In der ersten Schaltstellung besteht somit einerseits ein Verzahnungseingriff zwischen der Verzahnung 39 des vierten Zahnrades 34 und der zweiten Verzahnung 56' des ersten Schaltrings 48 und andererseits ein Verzahnungseingriff zwischen dem zweiten Schaltring 50 und der Nabe 60. In der zweiten Schaltstellung besteht einerseits ein Verzahnungseingriff zwischen der Verzahnung 40 des Bundes 42 und der ersten Verzahnung 56 des ersten Schaltrings 48 und anderseits ein Verzahnungseingriff zwischen dem zweiten Schaltring 50 und mittelbar über den Kupplungskörper 62 mit dem Zahnrad 18. In der Zwischenschaltstellung besteht einerseits ein Verzahnungseingriff zwischen der Verzahnung 40 des Bundes 42 und der ersten Verzahnung 56 des ersten Schaltrings 48 und andererseits ein Verzahnungseingriff zwischen dem zweiten Schaltring 50 und der Nabe 60.

Die Funktion der Ausnehmung 37 besteht neben der Aufnahme der Verzahnung 39 darin, dass das Schaltelement 22 zumindest in der ersten Schaltstellung teilweise in die Ausnehmung eingerückt werden kann, wodurch die axiale Baulänge der erfindungsgemäßen Getriebeanordnung 10 reduziert wird.

Desweiteren kann durch die Ausnehmung 37 und die spezifische Anordnung der ersten und der zweiten Verzahnung 56, 56' auf dem ersten Schaltring 48 gewährleistet werden, dass das Schaltelement 22 die Freilaufstellung einnimmt. Wird nämlich, beispielsweise ausgehend von der Zwischenschaltstellung in Figur 2, das Schaltelement 22 in Richtung der ersten Schaltstellung verschoben, gerät zunächst die erste Verzahnung 56 des ersten Schaltrings 48 aus dem Eingriff zu der Verzahnung 40 auf dem Bund 42. Damit in dieser Freilaufposition die zweite Verzahnung 56' des ersten Schaltrings 48 noch nicht in Eingriff mit der Verzahnung 39 des vierten Zahnrades 34 steht, muss die zweite Verzahnung 56' bezogen auf die erste Verzahnung 56 axial innerhalb auf dem ersten Schaltring 48 angeordnet sein. Dies wiederum erfordert, dass die erste Verzahnung 56, die aus Sicht der zweiten Verzahnung 56' in axialer Richtung übersteht, beim Verschieben des Schaltelements 22 in die erste Schaltstellung in die Ausnehmung 37 des vierten Zahnrades 34 einrücken muss und zwar über die Ebene der Verzahnung 39 hinaus in den axialen Zwischenraum zwischen der Verzahnung 39 und der Grundfläche 78 der Ausnehmung 37.

In der Figur 2 und der hierin gezeigten Zwischenschaltstellung ist ferner zu erkennen, dass die axiale Breite des Schaltelements 22 annähernd der axialen Breite des Bundes 42 und der Nabe 60 gemeinsam entspricht und die axiale Breite des ersten Schaltrings 48 annähernd der axialen Breite des Bundes 42 entspricht. Weiterhin sind der erste und der zweite Schaltring 48, 50 weitestgehend in einem gleichen radialen Abstand von der Drehachse D angeordnet. Damit eine formschlüssige Verbindung zwischen dem Antriebselement 14 und dem Schaltelement 22 in der Zwischenschaltstellung und der zweiten Schaltstellung hergestellt werden kann, ist der Bund 42 des Antriebselements soweit radial auskragend gestaltet, dass die auf dem Bund 42 angeordnete Verzahnung 40 sich annähernd in dem gleichen radialen Abstand zur Drehachse D befindet wie ein Außenumfang der Nabe 60.

### Bezugszeichenliste

- 10: Getriebeanordnung
- 11: erste Getriebeeinheit
- 12: Untersetzungsstufe
- 13: zweite Getriebeeinheit
- 14: Antriebselement
- 15: vierte Getriebeeinheit
- 16: Abtriebswelle
- 17: fünfte Getriebeeinheit
- 18: Zahnrad
- 20: Schaltvorrichtung
- 22: Schaltelement
- 24: Gegenwelle
- 26: erster Zahnradsatz
- 28: Zahnrad
- 30: Zahnrad
- 32: zweiter Zahnradsatz
- 34: Zahnrad
- 35: Stirnseite
- 36: Zahnrad
- 37: Ausnehmung
- 38: axiales Ende
- 39: Verzahnung
- 40: Verzahnung
- 42: Bund
- 48: Schaltring
- 50: Schaltring
- 52: Stirnfläche
- 54: Stirnfläche
- 56, 56': Verzahnung
- 58, 58': Verzahnung
- 60: Nabe
- 61: Längsverzahnung
- 62: Kupplungskörper
- 64: Schulter
- 66: Schulter
- 68: Nabenabschnitt
- 69: Längsverzahnung
- 70: Schulter
- 72: Lagerabschnitt
- 74: Schulter
- 76: Öffnung
- 78: Grundfläche

## Patentansprüche

1. Getriebeanordnung (10), umfassend
eine Untersetzungsstufe (12) mit einem Antriebselement (14) zum Antrieb der Getriebeanordnung (10) um eine Drehachse D,
eine Abtriebswelle (16), auf der ein Zahnrad (18) drehbar angeordnet ist,
eine Schaltvorrichtung (20), die ein Schaltelement (22) zur Einnahme mehrerer Schaltstellungen aufweist,
wobei in einer ersten Schaltstellung das Schaltelement (22) die Abtriebswelle (16) unter Zwischenschaltung der Untersetzungsstufe (12) mit dem Antriebselement (14) antriebsmäßig verbindet, in einer zweiten Schaltstellung das Schaltelement (22) das Zahnrad (18) mit dem Antriebselement (14) antriebsmäßig verbindet, das Schaltelement (22) ausgehend von der ersten Schaltstellung in eine Freilaufstellung verschiebbar ist, in der das Antriebselement (14) und die Abtriebswelle (16) gegeneinander drehbar sind, und das Schaltelement (22) ausgehend von der zweiten Schaltstellung in eine Zwischenschaltstellung verschiebbar ist, in der das Zahnrad (18) gegenüber der Schaltvorrichtung (20) drehbar ist und das Schaltelement (22) die Abtriebswelle (16) mit dem Antriebselement (14) antriebsmäßig verbindet,
**dadurch gekennzeichnet, dass** das Schaltelement (22) sequentiell zwischen der ersten Schaltstellung, der Freilaufstellung, der Zwischenschaltstellung und der zweiten Schaltstellung axial verschiebbar ist.

2. Getriebeanordnung (10) nach Anspruch 1,
**dadurch gekennzeichnet, dass** die Schaltvorrichtung (20) drehfest auf der Abtriebswelle (16) angeordnet ist.

3. Getriebeanordnung (10) nach einem der Ansprüche 1 bis 2,
**dadurch gekennzeichnet, dass** die Untersetzungsstufe (12) eine Gegenwelle (24), einen ersten Zahnradsatz (26) mit einem zweiten und dritten Zahnrad (28, 30), die drehfest jeweils auf dem Antriebselement (14) und der Gegenwelle (24) angeordnet sind, und einen zweiten Zahnradsatz (32) mit einem vierten und fünften Zahn-rad (34, 36), wobei das vierte Zahnrad (34) drehbar auf dem Antriebselement (14) und das fünfte Zahnrad (36) drehfest auf der Gegenwelle (24) angeordnet sind, umfasst.

4. Getriebeanordnung (10) nach Anspruch 3,
**dadurch gekennzeichnet, dass** das vierte Zahnrad (34) in seiner der Schaltvorrichtung (20) zugewandten Stirnseite (35) eine konzentrische Ausnehmung (37) aufweist, in die das Schaltelement (22) zumindest in der ersten Schaltstellung teilweise eingerückt ist.

5. Getriebeanordnung (10) nach Anspruch 4,
**dadurch gekennzeichnet, dass** in der Ausnehmung (37) eine umlaufende Verzahnung (39) angeordnet ist, zum formschlüssigen Eingriff des Schaltelements (22) in der ersten Schaltstellung.

6. Getriebeanordnung (10) nach einem der Ansprüche 1 bis 5,
**dadurch gekennzeichnet, dass** die Abtriebswelle (16) in dem Antriebselement (14) drehbar gelagert ist.

7. Getriebeanordnung (10) nach einem der Ansprüche 1 bis 6,
**dadurch gekennzeichnet, dass** das Antriebselement (14) an seinem der Schaltvorrichtung (20) zugewandten axialen Ende (38) umfangsverteilt eine Verzahnung (40) auf-weist, zum formschlüssigen Eingriff des Schaltelements (22) in zumindest einer der Schaltstellungen.

8. Getriebeanordnung (10) nach Anspruch 7,
**dadurch gekennzeichnet, dass** das axiale Ende (38) des Antriebselements (14) einen radial auskragenden Bund (42) ausbildet, der umfangsverteilt die Verzahnung (40) aufweist.

9. Getriebeanordnung (10) nach einem der Ansprüche 1 bis 8,
**dadurch gekennzeichnet, dass** das Schaltelement (22) zwei Schaltringe (48, 50) umfasst, wobei die Schaltringe (48, 50) an jeweiligen Stirnflächen (52, 54) zu dem Schaltelement (22) zusammengesetzt sind.

10. Getriebeanordnung (10) nach Anspruch 9,
**dadurch gekennzeichnet, dass** jeder der zwei Schaltringe (48, 50) jeweils zwei umfänglich verlaufende Verzahnungen (56, 56', 58, 58') aufweist.

11. Getriebeanordnung (10) nach Anspruch 10,
**dadurch gekennzeichnet, dass** der der Untersetzungsstufe (12) zugewandte erste Schaltring (48) die erste Verzahnung (56) auf einem Innenumfang und die zweite Verzahnung (56') auf einem Außenumfang ausbildet.

12. Getriebeanordnung (10) nach Anspruch 10 oder 11,
**dadurch gekennzeichnet, dass** sich die erste Verzahnung (56) und die zweite Verzahnung (56') des ersten Schaltrings (48) ausgehend von einer Querschnittsebene des Schaltrings (48) zu entgegengesetzten axialen Seiten erstrecken.

## Claims

1. Gearbox arrangement (10), comprising
a speed reduction stage (12) with a drive element (14) for the drive of the gearbox arrangement (10) about an axis of rotation D,
an output shaft (16) on which a toothed gear (18) is rotatably arranged,
a shift apparatus (20) which has a shift element (22) for assuming multiple shift positions, wherein, in a first shift position, the shift element (22) connects the output shaft (16) in terms of drive to the drive element (14) via the speed reduction stage (12),
in a second shift position, the shift element (22) connects the toothed gear (18) in terms of drive to the drive element (14),
the shift element (22) is displaceable from the first shift position into a freewheeling position, in which the drive element (14) and the output shaft (16) are rotatable relative to one another,
and the shift element (22) is displaceable from the second shift position into an intermediate shift position, in which the toothed gear (18) is rotatable relative to the shift apparatus (20) and the shift element (22) connects the output shaft (16) in terms of drive to the drive element (14), **characterized in that** the shift element (22) is axially displaceable sequentially between the first shift position, the freewheeling position, the intermediate shift position and the second shift position.

2. Gearbox arrangement (10) according to Claim 1, **characterized in that** the shift apparatus (20) is arranged rotationally conjointly on the output shaft (16).

3. Gearbox arrangement (10) according to either of Claims 1 and 2,
**characterized in that** the speed reduction stage (12) comprises a countershaft (24), a first toothed gear set (26) with a second and third toothed gear (28, 30) which are arranged rotationally conjointly on the drive element (14) and on the countershaft (24) respectively, and a second toothed gear set (32) with a fourth and fifth toothed gear (34, 36), wherein the fourth toothed gear (34) is arranged rotatably on the drive element (14) and the fifth toothed gear (36) is arranged rotationally conjointly on the countershaft (24).

4. Gearbox arrangement (10) according to Claim 3,
**characterized in that** the fourth toothed gear (34) has, in its face side (35) facing toward the shift apparatus (20), a concentric recess (37) into which the shift element (22) is partially displaced at least in the first shift position.

5. Gearbox arrangement (10) according to Claim 4,
**characterized in that**, in the recess (37), there is arranged an encircling toothing (39) for the positively locking engagement of the shift element (22) in the first shift position.

6. Gearbox arrangement (10) according to one of Claims 1 to 5,
**characterized in that** the output shaft (16) is rotatably mounted in the drive element (14).

7. Gearbox arrangement (10) according to one of Claims 1 to 6,
**characterized in that** the drive element (14) has, circumferentially distributed on its axial end (38) facing toward the shift apparatus (20), a toothing (40) for the positively locking engagement of the shift element (22) in at least one of the shift positions.

8. Gearbox arrangement (10) according to Claim 7,
**characterized in that** the axial end (38) of the drive element (14) has a radially projecting collar (42) which has the toothing (40) in a circumferentially distributed manner.

9. Gearbox arrangement (10) according to one of Claims 1 to 8,
**characterized in that** the shift element (22) comprises two shift rings (48, 50), wherein the shift rings (48, 50) are assembled, at respective face surfaces (52, 54), to form the shift element (22).

10. Gearbox arrangement (10) according to Claim 9,
**characterized in that** each of the two shift rings (48, 50) has in each case two circumferentially running toothings (56, 56', 58, 58').

11. Gearbox arrangement (10) according to Claim 10,
**characterized in that** the first shift ring (48), which faces toward the speed reduction stage (12), forms the first toothing (56) on an inner circumference and the second toothing (56') on an outer circumference.

12. Gearbox arrangement (10) according to Claim 10 or 11,
**characterized in that** the first toothing (56) and the second toothing (56') of the first shift ring (48) extend to opposite axial sides proceeding from one cross-sectional plane of the shift ring (48).

## Revendications

1. Ensemble de transmission (10), comprenant :
un étage de démultiplication (12) avec un élément d'entraînement (14) pour l'entraînement de l'ensemble de transmission (10) autour d'un axe de rotation D,
un arbre de prise de force (16) sur lequel est disposée de manière rotative une roue dentée (18),
un dispositif de commutation (20) qui présente un élément de commutation (22) pouvant prendre plusieurs positions de commutation,
dans une première position de commutation, l'élément de commutation (22) reliant par entraînement l'arbre de prise de force (16) à l'élément d'entraînement (14) par interposition de l'étage de démultiplication (12),
dans une deuxième position de commutation, l'élément de commutation (22) reliant par entraînement la roue dentée (18) à l'élément d'entraînement (14),
l'élément de commutation (22) pouvant être déplacé à partir de la première position de commutation dans une position de roue libre dans laquelle l'élément d'entraînement (14) et l'arbre de prise de force (16) peuvent tourner l'un par rapport à l'autre, et l'élément de commutation (22) pouvant être déplacé à partir de la deuxième position de commutation dans une position de commutation intermédiaire dans laquelle la roue dentée (18) peut tourner par rapport au dispositif de commutation (20) et l'élément de commutation (22) relie par entraînement l'arbre de prise de force (16) à l'élément d'entraînement (14),
**caractérisé en ce que** l'élément de commutation (22) peut être déplacé axialement de manière séquentielle entre la première position de commutation, la position de roue libre, la position de commutation intermédiaire et la deuxième position de commutation.

2. Ensemble de transmission (10) selon la revendication 1,
**caractérisé en ce que** le dispositif de commutation (20) est disposé de manière solidaire en rotation sur l'arbre de prise de force (16).

3. Ensemble de transmission (10) selon l'une quelconque des revendications 1 à 2,
**caractérisé en ce que** l'étage de démultiplication (12) présente un arbre conjugué (24), un premier jeu de roues dentées (26) avec une deuxième et une troisième roue dentée (28, 30) qui sont disposées de manière solidaire en rotation à chaque fois sur l'élément d'entraînement (14) et l'arbre conjugué (24), et un deuxième jeu de roues dentées (32) avec une quatrième et une cinquième roue dentée (34, 36), la quatrième roue dentée (34) étant disposée de manière rotative sur l'élément d'entraînement (14) et la cinquième roue dentée (36) étant disposée de manière solidaire en rotation sur l'arbre conjugué (24).

4. Ensemble de transmission (10) selon la revendication 3,
**caractérisé en ce que** la quatrième roue dentée (34) présente, dans son côté frontal (35) tourné vers le dispositif de commutation (20), un évidement concentrique (37) dans lequel l'élément de commutation (22) est au moins en partie embrayé dans la première position de commutation.

5. Ensemble de transmission (10) selon la revendication 4,
**caractérisé en ce que** dans l'évidement (37) est disposée une denture périphérique (39) pour l'engagement par correspondance de formes de l'élément de commutation (22) dans la première position de commutation.

6. Ensemble de transmission (10) selon l'une quelconque des revendications 1 à 5,
**caractérisé en ce que** l'arbre de prise de force (16) est supporté de manière rotative dans l'élément d'entraînement (14).

7. Ensemble de transmissions (10) selon l'une quelconque des revendications 1 à 6,
**caractérisé en ce que** l'élément d'entraînement (14) présente, sur son extrémité axiale (38) tournée vers le dispositif de commutation (20), une denture (40) répartie sur le pourtour pour l'engagement par correspondance de formes de l'élément de commutation (22) dans au moins l'une des positions de commutation.

8. Ensemble de transmission (10) selon la revendication 7,
**caractérisé en ce que** l'extrémité axiale (38) de l'élément d'entraînement (14) constitue un épaulement saillant radialement (42) qui présente la denture (40) répartie sur le pourtour.

9. Ensemble de transmission (10) selon l'une quelconque des revendications 1 à 8,
**caractérisé en ce que** l'élément de commutation (22) comprend deux bagues de commutation (48, 50), les bagues de commutation (48, 50) étant assemblées au niveau de surfaces frontales respectives (52, 54) pour former l'élément de commutation (22).

10. Ensemble de transmission (10) selon la revendication 9,
**caractérisé en ce que** chacune des deux bagues de commutation (48, 50) présente à chaque fois deux dentures s'étendant sur le pourtour (56, 56', 58, 58').

11. Ensemble de transmission (10) selon la revendication 10,
**caractérisé en ce que** la première bague de commutation (48) tournée vers l'étage de démultiplication (12) constitue la première denture (56) sur un pourtour intérieur et la deuxième denture (56') sur un pourtour extérieur.

12. Ensemble de transmission (10) selon la revendication 10 ou 11,
**caractérisé en ce que** la première denture (56) et la deuxième denture (56') de la première bague de commutation (48) s'étendent à partir d'un plan en section transversale de la bague de commutation (48) jusqu'à des côtés axiaux opposés.
